# EUROPÄISCHE PATENTSCHRIFT

(11) **EP 0 561 822 B1**
(45) Veröffentlichungstag und Bekanntmachung des Hinweises auf die Patenterteilung: **10.08.1994**
(21) Anmeldenummer: 91920451.1
(22) Anmeldetag: 26.11.1991
(51) Int. Cl.: B62D 25/08, B62D 29/00, B60R 19/34

(54) **TRÄGERVERBINDUNG AN EINER FAHRZEUGKAROSSERIE, INSBESONDERE LÄNGSTRÄGERVERBINDUNG, UND VERFAHREN ZUM AUSTAUSCH EINES ALUMINIUMTRÄGERS**
BEARER JOINT FOR VEHICLE BODYWORK, ESPECIALLY LONGITUDINAL BEARER JOINT, AND PROCESS FOR REPLACING AN ALUMINIUM BEARER
ASSEMBLAGE DE SUPPORTS SUR UNE CARROSSERIE AUTOMOBILE, NOTAMMENT DE LONGERONS, ET PROCEDE POUR LE REMPLACEMENT D'UN SUPPORT EN ALUMINIUM

(30) Priorität: 20.12.1990 DE 4040945
(43) Veröffentlichungstag der Anmeldung: 29.09.1993
(73) Patentinhaber: AUDI AG, 85002 Ingolstadt (DE)
(72) Erfinder: KREIS, Gundolf, D-8072 Oberstimm (DE); REITER, Karl, D-8071 Wettstetten (DE); TIMM, Heinrich, D-8070 Ingolstadt (DE)
(74) Vertreter: Engelhardt, Harald
(86) Internationale Anmeldenummer: EP9102232
(87) Internationale Veröffentlichungsnummer: WO9211163

(56) Entgegenhaltungen:
- DE-A- 3 447 036
- FR-A- 2 394 422
- US-A- 2 880 013
- US-A- 3 252 211
- PATENT ABSTRACTS OF JAPAN vol. 9 no. 198 (M-404) 15. August 1985 & JP,A,60 061 179 (SUMITOMO KEIKINZOKU) 8. April 1985

## Beschreibung

Die Erfindung betrifft ein Verfahren zum Austausch eines Aluminiumträgers an einer Trägerverbindung einer Fahrzeugkarosserie, insbesondere an einer Längsträgerverbindung, nach dem Oberbegriff des Anspruchs 1.

Es ist bekannt (EP-PS 0 146 716), die Tragstruktur von Fahrzeugkarosserien unter Verwendung von Hohlprofilträgern herzustellen, die durch Knotenelemente miteinander verbunden sind. Als Hohlprofilträger werden Aluminium-Strangpreßprofile und als Knotenelemente Aluminium-Gußknotenteile eingesetzt.

Es ist weiter bekannt, als Hohlprofil ausgebildete Längsträger eines Kraftfahrzeugrahmens aus verformbaren Längsträgerabschnitten aufzubauen. Diese Längsträgerabschnitte sind durch in Querrichtung umlaufende Schweißnähte verbunden und durch unterschiedliche Wandstärken und/oder Werkstoffgüten so dimensioniert, daß jeder Längsträgerabschnitt zur Fahrzeugmitte hin eine zunehmend größere Deformations-Steifigkeit aufweist. Damit wird eine abgestufte Deformations-Steifigkeit zur Fahrzeugmitte hin erreicht, so daß bei leichteren Unfällen nur jeweils einer oder gegebenenfalls je nach Unfallschwere mehrere Längsträgerabschnitte der Reihe nach deformiert werden ohne Beschädigung anschließender Abschnitte. Bei einer Reparatur brauchen nur die verformten Abschnitte ausgewechselt werde. Damit wird eine unerwünschte Gesamtdeformation des Fahrzeugrahmens schon bei kleineren Unfällen vermieden. Der dargestellte Kraftfahrzeugrahmen ist aus Blechteilen aufgebaut, so daß das Auswechseln durch Abtrennen von Längsträgerabschnitten und erneutes Anschweißen neuer Abschnitte keine prinzipiellen Probleme hervorruft.

Bei einer weiter bekannten Längsträgerausführung eines Fahrzeugrahmens (DE-A- 37 40 402) sind die Längsträger vor der Aggregateaufhängung geteilt. Auch hier sind die vorderen Längsträgerteile als Deformationselemente so ausgebildet, daß sie gegenüber den hinteren Längsträgerteilen leichter verformbar sind. Die Verbindung der hintereinander liegenden Längsträgerteile erfolgt über Anlageflächen, die als in Querrichtung liegende Rotationsflächen ausgeführt sind und über eine in Axialrichtung durchgehende, zentrale Verschraubung durch diese Anlageflächen. Diese Ausführungsform ist insbesondere bei Verwendung von Aluminium-Strangprofilen als vorteilhaft herausgestellt. Ein Austausch eines vorderen, verformten Längsträgerteils nach einem leichteren Aufprall ist aufgrund der Verschraubung relativ einfach und schnell möglich, wobei die nachfolgend geschilderten Probleme beim Austausch mit Schweißverbindungen nicht auftreten. Die Kosten für solche Schraubverbindungen sind jedoch relativ hoch.

Aus dem eingangs erwähnten Stand der Technik (EP-PS 0 146 716) ist eine Trägerverbindung an einer Fahrzeugkarosserie bekannt, wobei ein Aluminiumträger als Strangprofil in eine rohrförmige Aluminiumaufnahme eines Gußteils eingesteckt ist und am stirnseitigen Rand dieser rohrförmigen Aufnahme umlaufend über eine Schweißnaht verschweißt ist. Eine solche Verbindung ist stabil und preiswert herstellbar.

Es ist aber nun allgemein bekannt, daß bei der Verwendung von aushärtbaren Aluminiumlegierungen eine Schmelzschweißung in der sog. Wärmeeinflußzone einen wesentlichen Festigkeitsabfall im Material erzeugt. Besonders eine umlaufende Schweißverbindung, wie sie bei der vorstehend beschriebenen Trägerverbindung verwendet wird, ist kritisch, da dadurch eine Schwächung in einer durchgehenden Querebene erfolgt. Der Festigkeitsabfall bei einer ersten Trägerverbindung und ersten Schweißung kann bei der Dimensionierung berücksichtigt werden. Das an sich übliche Auswechseln von Trägern durch Auftrennen der Schweißnaht, Einsetzen eines neuen Trägerteils und erneutes Verschweißen am stirnseitigen Rand der rohrförmigen Aufnahme führt aber durch den erneuten Schweißvorgang zu einer weiteren unkontrollierbaren Gefügeschädigung mit entsprechend hohem Festigkeitsabfall mit der Gefahr eines Bruches bei hoher Belastung.

Dieses Problem tritt insbesondere bei der Trägerverbindung an einem geteilten Längsträger auf, da hier von vorneherein vorgesehen ist, bei einer Reparatur nach einem Unfalll den vorderen leichter deformierbaren Längsträgerteil gegebenenfalls sogar öfter während der Lebensdauer eines Fahrzeugs auszuwechseln. Dabei würde durch die wiederholt notwendigen Schweißvorgänge die Verbindungsstelle durch einen fortschreitenden Strukturwandel in der Wärmeeinflußzone des Aluminiumlegierungsmaterials untragbar geschwächt werden.

Es wäre denkbar, von vorneherein die Verbindungsstelle so stark zu dimensionieren, daß auch der vorstehend genannte starke, durch nacheinander durchgeführte Schweißungen verursachte Festigkeitsabfall zu keiner Bruchgefahr führt. Dies ist jedoch aus Kostengründen und Gewichtsgründen keine praktikable Lösung, außerdem soll dem Kunden nach der Reparatur eine Karosserie mit der Originalfestigkeit überlassen werden.

Aufgabe der Erfindung ist es, ein geeignetes Verfahren zum Austausch eines Aluminiumträgers vorzuschlagen, wobei die Festigkeit der ursprünglichen Trägerverbindung wieder herstellbar ist.

Diese Aufgabe wird mit den Merkmalen des Anspruchs 1 gelöst.

Nach Anspruch 1 ist bei dem Verfahren zum Austausch eines Aluminiumträgers eine Trägerverbindung an einer Fahrzeugkarosserie, insbesondere eine Längsträgerverbindung, dadurch hergestellt, daß der Aluminiumträger als Strangprofil in eine rohrförmige Aluminiumaufnahme mit entsprechendem Querschnitt eingesetzt ist und am stirnseitigen Rand dieser rohrförmigen Aufnahme umlaufend über eine Schweißnaht verschweißt ist. Erfindungsgemäß umfaßt die Länge der Aufnahme wenigstens einen ersten Längsbereich, der für den Formschluß einer festen Verbindung erforderlich ist. Die Länge der Aufnahme bzw. die mögliche Einstecklänge für den Träger soll weiter einen zweiten Längsbereich umfassen, der der axialen Ausdehnung einer Wärmeeinflußzone an der umlaufenden Schweißnaht entspricht. Diese Wärmeeinflußzone bzw. deren axiale Ausdehnung in der rohrförmigen Aufnahme ist dadurch bestimmt, daß in diesem Bereich noch ein wesentlicher und für eine feste Verbindung kritischer Festigkeitsabfall festzustellen ist. Die rohrförmige Aluminiumaufnahme kann auch aus mehreren Gußteilen zusammengesetzt sein.

Für einen Austausch des Trägers wird dessen Demontage so durchgeführt, daß vom stirnseitigen Rand her ein Ring von der rohrförmigen Aufnahme einschließlich dem über die Schweißnaht damit verbundenen Aluminiumträger abgetrennt und abgenommen wird. Die axiale Länge des Rings entspricht dabei wenigstens dem zweiten Längsbereich bzw. der axialen Ausdehnung einer Wärmeeinflußzone in der Aufnahme. Damit ist der Bereich, in dem ein Festigkeitsabfall durch die ursprüngliche Schweißung aufgrund von Strukturänderungen im Material erfolgt ist, abgetrennt, so daß wieder die Aufnahme mit der ursprünglichen Festigkeit vor einer Schweißung zur Verfügung steht.

Anschließend wird, beispielsweise für eine Reparatur nach einem Unfall, ein neuer Aluminiumträger in die verkürzte Aufnahme eingesetzt und am stirnseitigen Rand der verkürzten Aufnahme umlaufend über eine neue Schweißnaht wieder verschweißt. Die axiale Länge der Aufnahme ist erfindungsgemäß trotz der Verkürzung noch so lange, daß ein ausreichender Formschluß für eine neue feste Verbindung gewährleistet ist.

Damit wird erreicht, daß nicht durch mehrere aufeinanderfolgende Schweißvorgänge an denselben Stellen und denselben Wärmeeinflußzonen ein unzulässiger Abfall in der Materialfestigkeit hervorgerufen wird, so daß ein einfacher Trägeraustausch unter Beibehaltung der Originalfestigkeit möglich wird.

Zweckmäßig werden nach Anspruch 2 mehrere, bevorzugt zwei, zweite Längsbereiche hintereinander angeordnet. Damit sind beispielsweise durch zweimalige Anwendung des Verfahrens zwei Reparaturen von vorderen Längsträgerteilen durch deren einfachen Austausch möglich, ohne daß ein aufwendiger Austausch der Aluminiumaufnahme erforderlich ist. Der Austausch der Aluminiumaufnahme ist ersichtlich wesentlich aufwendiger, da diese üblicherweise Bestandteil eines oder mehrerer Aluminiumgußteile ist, das einen Knotenpunkt als Verbindungselement für mehrere Träger darstellt.

Mit Anspruch 3 wird vorgeschlagen, an der Außenfläche der Aufnahme Quermarkierungen im Abstand der zweiten Längsbereiche anzubringen. Damit sind die axialen Längen der Wärmeeinflußzonen für den reparierenden Werker sichtbar gemacht, so daß dieser die Aufnahme jeweils an den Markierungen bei einer Reparatur abtrennen muß.

Anhand einer Zeichnung wird das Verfahren näher erläutert.

Es zeigen
- Fig. 1: eine schematische Seitenansicht der Tragstruktur eines vorderen Bereichs einer Fahrzeugkarosserie mit einem zweiteiligen vorderen Längsträger,
- Fig. 2: einen Schnitt durch die Längsträgerverbindung eines ersten vorderen Längsträgerteils und eines zweiten vorderen Längsträgerteils.

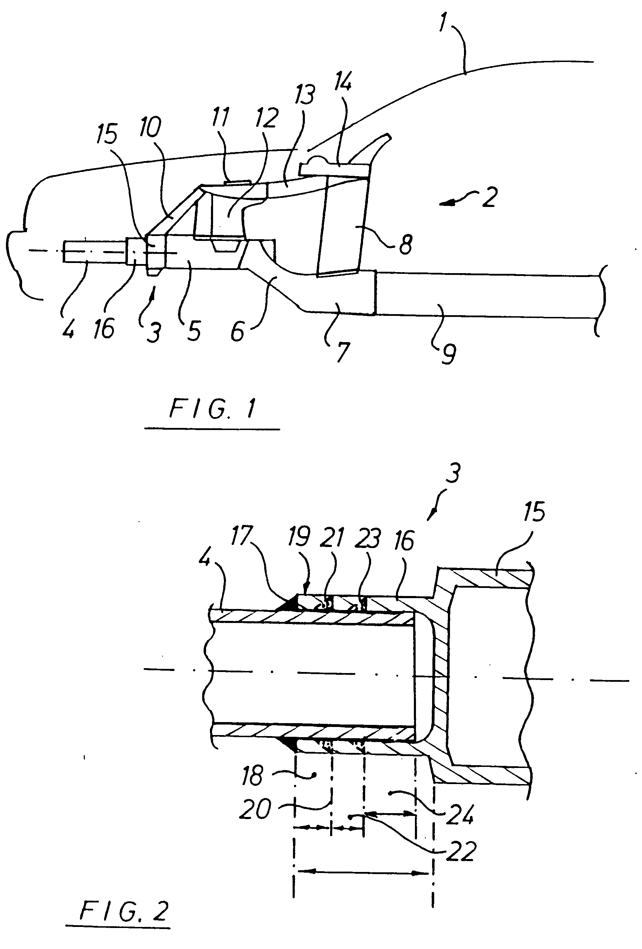

In Fig. 1 ist schematisch ein Kraftfahrzeug 1 im Schnitt dargestellt, wobei in der Seitenansicht der vordere Bereich der Tragstruktur der Fahrzeugkarosserie 2 zu ersehen ist. Ein vorderer Längsträger 3 besteht aus einem ersten vorderen Längsträgerteil 4 und einem anschließenden zweiten Längsträgerteil 5, der über eine seitliche Umlenkung 6 mit dem Fußpunkt des Pfosten A 8 und nachfolgend mit dem Schweller 9 verbunden ist.

Vom vorderen Ende des zweiten Längsträgerteils 5 verläuft ein Federbeinträger 10 schräg nach oben zur Halterung eines Federbeintopfs 11, der über einen weiteren, etwa senkrecht stehenden Träger 12 nach unten auf das zweite Längsträgerteil 5 und über einen Träger 13 zum mittleren Bereich 14 des Pfosten A 8 abgestützt ist.

Der erste Längsträgerteil 4 und der zweite Längsträgerteil 5 sind über ein oder mehrere Gußteile 15 miteinander verbunden, an dem zusätzlich der Federbeinträger 10 angeformt ist.

In Fig. 2 ist ein vergrößerter Schnitt durch das Gußteil 15 mit dem eingesetzten ersten Trägerteil 4 gezeigt. Das Trägerteil 4 ist in der vorliegenden Ausführung zylindrisch ausgebildet und in eine entsprechend geformte zylindrische Aufnahme 16 am Gußteil 15 eingesetzt sowie am stirnseitigen Rand umlaufend über eine Schweißnaht 17 verschweißt.

Durch den Schweißvorgang für die Schweißnaht 17 wird eine erste Wärmeeinflußzone 18 geschaffen, in der durch eine Strukturänderung im Material ein wesentlicher Festigkeitsabfall festzustellen ist. Die axiale Längserstreckung dieser Wärmeeinflußzone im Material der Aufnahme 16 ist eingezeichnet. Der erste vordere Längsträgerteil 4 ist als Deformationselement so ausgebildet, daß bei einem leichteren Aufprall nur dieser Teil deformiert wird und die rückwärtig anschließenden Teile, insbesondere das oder der Gußteile 15 und der zweite Längsträgerteil 5 unbeschädigt bleiben. Bei einem solchen Aufprall braucht somit in einem Austauschverfahren nur der vordere Längsträgerteil 4 ausgewechselt werden.

In einem ersten Verfahrensschritt wird ein Ring 19 entlang der Linie 20 abgetrennt und einschließlich dem über die Schweißnaht 17 damit verbundenen Aluminiumträger 4 aus der Aufnahme 16 abgenommen. Anschließend wird in einem zweiten Verfahrensschritt ein neuer Längsträgerteil 4 in die Aufnahme 16 eingesetzt und mit einer neuen Schweißnaht 21 verschweißt, wodurch eine zweite Wärmeeinflußzone 22 gebildet wird.

Bei einem weiteren Aufprall, bei dem wieder der erste Längsträgerteil 4 verformt ist, kann durch Anwendung des vorbeschriebenen Verfahrens eine weitere Reparatur entsprechend vorgenommen werden, wobei die Wärmeeinflußzone 22 abgetrennt wird und wieder ein neuer Längsträgerteil 4 über die Schweißnaht 23 verbunden wird. Der dabei noch verbleibende Einsteckbereich 24 ist so lange gewählt, daß noch eine ausreichend feste, formschlüssige Verbindung gewährleistet ist.

Damit wird ein Reparaturverfahren zur Verfügung gestellt, mit dem ohne Festigkeitseinbußen ursprünglich über Schweißverbindungen befestigte Träger ausgewechselt und erneut mit Schweißverbindungen befestigt werden können.

## Patentansprüche

1. Verfahren zum Austausch eines Aluminiumträgers an einer Trägerverbindung einer Fahrzeugkarosserie, insbesondere einer Längsträgerverbindung,
mit einem Aluminiumträger als Strangprofil, der in eine dem Querschnitt des Aluminiumträgers entsprechende rohrförmige Aluminiumaufnahme, insbesondere an einem Aluminiumgußteil, eingesteckt und am stirnseitigen Rand dieser rohrförmigen Aufnahme umlaufend über eine Schweißnaht verschweißt ist,
dadurch gekennzeichnet,
daß die Länge der Aufnahme (16) wenigstens einen ersten Längsbereich (24) umfaßt, der für den Formschluß einer festen Verbindung erforderlich ist, und wenigstens einen zweiten Längsbereich (18; 22) umfaßt, der der axialen Ausdehnung einer Wärmeeinflußzone entspricht, in der ein wesentlicher Festigkeitsabfall durch die Schweißung im Material der Ausnehmung (16) festzustellen ist,
daß für einen Austausch des Aluminiumträgers (4) die Demontage so durchgeführt wird, daß vom stirnseitigen Rand her ein Ring (19) von der rohrförmigen Aufnahme (16) abgetrennt und einschließlich dem über die Schweißnaht (17) damit verbundenen Aluminiumträger (4) abgenommen wird, wobei die axiale Länge des Rings (19) wenigstens dem zweiten Längsbereich (18) bzw. der axialen Ausdehnung einer Wärmeeinflußzone in der Aufnahme (16) entspricht,
daß anschließend ein neuer Aluminiumträger (4) wieder in die verkürzte Aufnahme (16) eingesetzt wird und
daß der eingesetzte Aluminiumträger (4) am neuen, stirnseitigen Rand der verkürzten Aufnahme (16) umlaufend über eine neue Schweißnaht (21) wieder verschweißt wird.

2. Verfahren nach Anspruch 1, dadurch gekennzeichnet, daß mehrere, bevorzugt zwei, zweite Längsbereiche (18; 22) hintereinander vorgesehen sind.

3. Verfahren nach Anspruch 1 oder 2, dadurch gekennzeichnet, daß an der Außenfläche der Aufnahme (16) Quermarkierungen an den Begrenzungen der zweiten Längsbereiche (18; 22) vorgesehen sind.

## Claims

1. Method for replacing an aluminium member on a beam connection of a vehicle body shell, more particularly a side-member connection,
having an aluminium member in the form of an extruded profile inserted into a tubular aluminium locator corresponding to the cross-section of the aluminium member, more particularly on an aluminium casting, and welded by means of a welding seam all round the front rim of said tubular locator,
characterised in that
the length of the locator (16) includes at least one first longitudinal area (24) needed for the positive connection of a fixed joint, and at least one second longitudinal area (18; 22) corresponding to the axial expansion of a heat-affected zone in which a substantial fall-off in strength will be found due to the welding in the material of the recess (16),
replacement of the aluminium member (4) involves disassembly such that from the front rim a ring (19) is detached from the tubular locator (16) and is removed along with the aluminium member (4) joined thereto via the weld (17), and the axial length of the ring (19) corresponds at least to the second longitudinal area (18), or rather to the axial expansion of a heat-affected zone in the locator (16),
a new aluminium member (4) is then re-inserted into the shortened locator (16) and
the inserted aluminium member (4) is re-welded to the new front rim of the shortened locator (16) by a new welding seam (21) running all the way round.

2. Method according to claim 1, characterised in that more than one second longitudinal area (18; 22), preferably two, are provided one behind the other.

3. Method according to claim 1 or 2, characterised by the provision of transverse markers on the outside face of the locator (16), at the boundaries of the second longitudinal areas (18; 22).

## Revendications

1. Procédé pour le remplacement d'une poutrelle en aluminium au niveau d'un point d'assemblage de la poutrelle d'une carrosserie d'automobile, en particulier du point d'assemblage d'un longeron,
dans lequel une poutrelle en aluminium sous forme de profilé filé est insérée dans un logement tubulaire en aluminium correspondant à la section de la poutrelle en aluminium, en particulier dans une pièce en fonte d'aluminium, et est soudée tout autour du bord d'extrémité de ce logement tubulaire par un cordon de soudure,
caractérisé en ce que
la longueur du logement (16) inclut au moins une première zone longitudinale (24) qui est nécessaire pour un assemblage solide par emboîtement et au moins une seconde zone longitudinale (18; 22) qui correspond à l'étendue axiale d'une zone affectée thermiquement dans laquelle on doit s'attendre à une baisse importante de la résistance due au soudage dans le matériau du logement (16);
le démontage pour le remplacement de la poutrelle en aluminium (4) est effectué en sectionnant et en détachant, du bord d'extrémité, un anneau (19) du logement tubulaire (16) et en enlevant en même temps la poutrelle en aluminium (4) qui est fixée à celui-ci par le cordon de soudure (17), la longueur axiale de l'anneau (19) correspondant au moins à la seconde zone longitudinale (18), c'est-à-dire à l'étendue axiale d'une zone affectée thermiquement dans le logement (16);
une poutrelle neuve en aluminium (4) est ensuite insérée dans le logement (16) raccourci; et
la poutrelle neuve en aluminium (4) insérée est ressoudée tout autour, au niveau du nouveau bord d'extrémité du logement (16) raccourci, par un nouveau cordon de soudure (21).

2. Procédé selon la revendication 1, caractérisé en ce que plusieurs (de préférence deux) secondes zones longitudinales (18; 22) sont prévues l'une à la suite de l'autre.

3. Procédé selon la revendication 1 ou 2, caractérisé en ce qu'il est prévu, sur la surface extérieure du logement (16), des repères transversaux aux limites des secondes zones longitudinales (18; 22).
